(19) Europäisches Patentamt
European Patent Office
Office européen des brevets

(11) **EP 3 219 459 B1**

(12) **EUROPÄISCHE PATENTSCHRIFT**

(45) Veröffentlichungstag und Bekanntmachung des Hinweises auf die Patenterteilung:
**03.11.2021 Patentblatt 2021/44**

(51) Int Cl.:
**B29C 35/16** (2006.01)  **B29K 21/00** (2006.01)
**B29L 30/00** (2006.01)  **B29D 30/00** (2006.01)

(21) Anmeldenummer: **17151540.6**

(22) Anmeldetag: **16.01.2017**

(54) **ELASTOMER-KÜHLVORRICHTUNG UND VERFAHREN**

ELASTOMER COOLING DEVICE AND METHOD

DISPOSITIF ET PROCÉDÉ DE REFROIDISSEMENT D'ÉLASTOMÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2016 DE 102016204552**

(43) Veröffentlichungstag der Anmeldung:
**20.09.2017 Patentblatt 2017/38**

(73) Patentinhaber: **Continental Reifen Deutschland GmbH**
**30165 Hannover (DE)**

(72) Erfinder: **Kuck, Detlef**
**30926 Seelze (DE)**

(74) Vertreter: **Continental Corporation**
**c/o Continental AG**
**Intellectual Property**
**Postfach 169**
**30001 Hannover (DE)**

(56) Entgegenhaltungen:
**CN-A- 102 528 983     DE-U1- 20 103 680**
**US-A1- 2013 277 880**

**Beschreibung**

Die Erfindung betrifft eine Vorrichtung zum Kühlen eines aus einer Gummimischung gebildeten Elastomer-Erzeugnisses.

Die Vorrichtung zum Kühlen eines aus einer Gummimischung gebildeten Elastomer-Erzeugnisses wird in dieser Schrift auch kurz als Elastomer-Kühlvorrichtung bezeichnet.

Das in der Elastomer-Kühlvorrichtung zu behandelnde und zu kühlende Elastomer-Erzeugnis dient als Halbzeug beispielsweise zur Herstellung von Reifen beziehungsweise zur Herstellung von Reifenbauteilen sowie zur Herstellung von Transportbändern, Schläuchen, Luftfederbälge, Antriebsriemen, Membrane, Schwingungsdämpfer und weiteren Gummiprodukten.

In der Gummi- beziehungsweise Kautschuk-Industrie ist das in Rede stehenden Elastomer-Erzeugnis ein Grundprodukt der Fertigung, es wird dort auch als Fell, Kautschukfell oder Gummifell bezeichnet. Das Elastomer-Erzeugnis ergibt sich beim Auswalzen oder Extrudieren der aus Rohkautschuk, Füllstoffen und verschiedenen Chemikalien zusammengesetzten jeweiligen Kautschuk-Mischung. Die Zusammensetzung der Kautschuk-Mischung variiert, abhängig von ihrer späteren Verwendung. Ein Transportband stellt die Verbindung zwischen Ausformextruder beziehungsweise - walzwerk und nachgeschalteter Bahn-Kühl-Trocken- und Schneidevorrichtung, die allgemein auch Batch-Off-Anlage genannt wird, her.

DE 201 03 680 U1 offenbart eine "Kühlanlage zum Kühlen mindestens einer Kautschukbahn (1), mit einer Fördereinrichtung (2) zum kontinuierlichen Fördern der Kautschukbahn (1) und mit einer Luftverteilereinrichtung, die von einer Gebläseeinrichtung geförderte Kühlluft auf mindestens eine Flachseite der Kautschukbahn (1) ausströmen lässt, dadurch gekennzeichnet, dass die Luftverteilereinrichtung in mindestens eine erste und mindestens eine zweite, der ersten nachgeordnete Luftkühleinheit (3 a, 3b) und die Gebläseeinrichtung in mindestens einen ersten und mindestens einen zweiten Ventilator (4 a, 4 b) aufgeteilt ist, dass die erste Luftkühleinheit (3 a) von dem ersten Ventilator (4 a} mit aus der Umgebung angesaugter und nicht vorgekühlter Kühlluft versorgt wird, dass die zweite Luftkühleinheit (3 b) von dem zweiten Ventilator (4 b} mit Kühlluft versorgt wird, dass die zweite Luftkühleinheit (3 b) in einem weitgehend geschlossenen Gehäuse (5) angeordnet ist, durch die die Kautschukbahn (1) mittels der Fördereinrichtung (2) hindurchführbar ist, dass der zweite Ventilator (4 b) zur Kreislaufführung der Kühlluft einen innerhalb des Gehäuses (5) angeordneten Luftansaugstutzen (6) aufweist und dass zur Vorkühlung der in das Gehäuse (5) zurückgeführten Kühlluft ein an ein Kälteaggregat (7) angeschlossener Wärmetauscher vorgesehen ist".

US 2013 0 277 880 A1 offenbart eine Vorrichtung gemäß dem Oberbegriff des Anspruchs 1.

In der Batch-Off-Anlage wird dieses Elastomer-Erzeugnis im Anfangsbereich in der sogenannten Sprühkammer mit Kühlwasser abgeschreckt, und beim Durchlaufen durch den Tunnel erfolgt durch Ventilatoren die Restkühlung und Trocknung. Am Ende wird das Elastomer-Erzeugnis entweder in Platten geschnitten oder im Zickzack auf Paletten abgelegt und beispielsweise in Stapeln von zwischen 500 und 1000 kg dem Mischungslager zugeführt.

Dem Sprühwasser wird dabei ein Trennmittel zugegeben um das Verkleben der Elastomer-Erzeugnisse bei der Stapelung auf der Palette zu vermeiden. Diese Felle dienen als Ausgangsprodukt für jede weitere Verarbeitung in der Gummi-Fabrik, sei es beispielsweise in der Reifen-Produktion, bei der Herstellung von Profilen, Schläuchen, Pressteilen, Schuhsohlen oder anderen Elastomer-Zwischen- und/oder Endprodukten. Das Elastomer-Erzeugnis wird in diesem Verfahrensschritt mit Trennmittel belegt.

Die Länge des Mischsaalgebäudes ist maßgeblich bestimmt durch die Länge der Batch-Off-Anlage einer Mischerlinie. Wenn eine vorhandene Mischanlage durch eine größere ersetzt werden soll, oder wenn in einem Gebäude, dass für eine Standard Mischanlage ausgelegt wurde, zusätzlich eine große Mischanlage installiert werden soll, reicht die zur Verfügung stehende Länge für eine herkömmliche Batch-Off-Anlage nicht aus.

Der Erfindung liegt daher die Aufgabe zu Grunde, die Gesamtlänge einer Elastomer-Kühlvorrichtung zu verkürzen.

Gelöst wird diese Aufgabe erfindungsgemäß durch eine Vorrichtung zum Kühlen eines aus einer Gummimischung gebildeten Elastomer-Erzeugnisses für die Herstellung von Fahrzeugreifen gemäß Anspruch 1. Durch die Anordnung von mindestens zwei Kühlvorrichtungen in unterschiedlichen Ebenen wird der für die Aufstellung der Elastomer-Kühlvorrichtung benötigte Bauraum kürzer.

Elastomer-Mischungen für Elastomer-Erzeugnisse werden in einem sogenannten Mischsaal hergestellt, für diesen Mischsaal wird ein Raster zu Grunde gelegt. In ihrer Längserstreckung hat eine Batch-Off-Anlage wie sie aus dem Stand der Technik bekannt ist einen Bedarf von bis zu vier Rastern. Ein Raster im Mischsaal weist eine Seitenlänge zwischen 5 und 9 m auf, bevorzugt eine Seitenlänge zwischen 6 und 8 m, besonders bevorzugt eine Seitenlänge zwischen 6,5 und 7,5 m auf. Das der Auslegung eines Industriegebäudes zu Grunde liegende Raster ist als Quadrat ausgeführt.

Durch die vorteilhafte Anordnung der mindestens zwei Kühlvorrichtungen der Elastomer-Kühlvorrichtung sinkt der Platzbedarf der Elastomer-Kühlvorrichtung auf zweieinhalb bis dreieinhalb Raster. Bevorzugt sinkt der Platzbedarf auf höchstens drei Raster je Elastomer-Kühlvorrichtung.

Durch die Kombination verschiedener Wärmeträgermedien innerhalb der mindestens zwei zu einer Elastomer-Kühlvorrichtung kombinierten Kühlvorrichtungen wird der Wärmeübergang vom zu kühlenden Elastomer-Erzeugnis auf den Wärmeträger optimiert, die Abfuhr der Wärmemenge pro Zeiteinheit beziehungsweise Transportweg des Elastomer-Erzeugnisses durch die Elastomer-Kühlvorrichtung wird verbessert.

Vorteilhaft ist vorgesehen, dass die mindestens zwei Kühlvorrichtungen übereinander angeordnet sind. Durch die Trennung des Mischbereiches und des Bereiches in dem die Elastomer-Kühlvorrichtung aufgestellt ist, ist regelmäßig ungenutzter Raum oberhalb und/oder unterhalb der Elastomer-Kühlvorrichtung vorhanden. Dieser umbaute Raum oberhalb und/oder unterhalb wird nun durch die erfindungsgemäße Elastomer-Kühlvorrichtung genutzt, wobei der Bedarf an Grundfläche sinkt. Diese freigewordene Grundfläche kann zur Aufstellung weiterer Produktionsmittel genutzt werden in bestehenden Industriegebäuden. Bei der Planung neuer Industriegebäude kann diese Grundfläche eingespart werden.

Weiterhin ist erfindungsgemäß vorgesehen, dass in mindestens einer der weiteren Kühlvorrichtungen eine Flüssigkeit als Kühlmittel für das Elastomer-Erzeugnis eingesetzt ist. Aufgrund der besseren Wärmeträgereigenschaften werden Flüssigkeiten zum Abtransport der Wärme von dem Elastomer-Erzeugnis eingesetzt. Besonders bevorzugt werden jedoch Wasser und Ethanol eingesetzt. Diese Substanzen sind in großen Mengen verfügbar, haben einen niedrigen Siedepunkt und sind im Hinblick auf die Umweltbelastung und der leichten Regenerierungsmöglichkeit als unkritisch zu betrachten. Weiterhin ist erfindungsgemäß vorgesehen, dass in mindestens einer der weiteren Kühlvorrichtungen ein wässriges Trennmittel als Kühlmittel für das Elastomer-Erzeugnis eingesetzt ist. Durch die Ausführung des Trennmittels als wässrige Trennmittelzubereitung mit aktiven Substanzen kann es zusätzlich die Funktion eines Kühlmittels übernehmen. Wärmeüberträger dienen zum Wärmeaustausch zwischen zwei Medien. Es wird zwischen direkten und indirekten Wärmeüberträgern unterschieden. Bei direkten Wärmeüberträgern geraten die beteiligten Medien in Kontakt, in mindestens einer der Kühlvorrichtungen tritt das wässrige Trennmittel in direkten Kontakt zum Elastomer-Erzeugnis, es erfolgt somit ein direkter Wärmeübergang. Hierdurch sowie den vorliegenden Temperaturunterschied zwischen den beiden Medien wird eine hohe Wärmeübertragungsrate erzielt.

Weiterhin ist erfindungsgemäß vorgesehen, dass eine der weiteren Kühlvorrichtungen als Kühl- und Benetzungsvorrichtung für das Elastomere-Erzeugnis ausgeführt ist.

Hierdurch wird eine Benetzung der Oberfläche des Elastomer-Erzeugnisses mit Trennmittel vorteilhaft mit einem Kühlvorgang verknüpft. Die gesteigerte Verweilzeit des Elastomer-Erzeugnisses in der wässrigen Trennmittelzubereitung erhöht die Möglichkeit, der Interaktion zwischen den aktiven Substanzen in der wässrigen Trennmittelzubereitung und der Oberfläche des Elastomeren-Erzeugnisses.

Weiterhin ist vorteilhaft vorgesehen, dass die Kühl- und Benetzungsvorrichtung eine Länge zwischen 4 und 10 m, bevorzugt zwischen 5 und 9 m, besonders bevorzugt zwischen 6 und 8 m aufweist. Hierdurch werden für die Aufstellung der Kühl- und Benetzungsvorrichtung höchstens eineinhalb Raster eines Mischsaales beziehungsweise eines Industriegebäudes benötigt.

Weiterhin ist erfindungsgemäß vorgesehen, dass die Kühl- und Benetzungsvorrichtung ein Trennmittel-Reservoir zum Benetzen des Elastomer-Erzeugnisses aufweist. Durch die in der Kühl- und Benetzungsvorrichtung direkte Kühlung des Elastomer-Erzeugnisses durch das Trennmittel wird eine hohe Wärmeübertragungsrate erzielt.

Weiterhin ist vorteilhaft vorgesehen, dass eine der weiteren Kühlvorrichtungen als Kühl- und/oder Abtropfvorrichtung für das Elastomere-Erzeugnis ausgeführt ist. Abhängig von den räumlichen Gegebenheiten in dem jeweiligen Mischsaal und der zu erzielenden Temperaturdifferenz zwischen der Elastomer-Erzeugnis-Eingangstemperatur und der Elastomer-Erzeugnis-Ausgangstemperatur kann hier ein weiterer Verfahrensschritt zur Kühlung des Elastomer-Erzeugnisses oder ein Verfahrensschritt zum Abtropfen des Trennmittels von dem Elastomer-Erzeugnis vorgesehen werden. Auch eine Kombination beider Verfahrensschritte ist denkbar.

Weiterhin ist vorteilhaft vorgesehen, dass zum Transport des Elastomeren-Erzeugnisses durch die Kühl- und Benetzungsvorrichtung sowie durch die Kühl- und/oder Abtropfvorrichtung als Stetigförderer ein Gliederkettenband mit optionalen Niederhalterrollen vorgesehen ist. Durch den Einsatz eines Gliederkettenbandes wird die Kontaktfläche zwischen dem Elastomer-Erzeugnis und der Oberfläche des Gliederkettenbandes gering gehalten.

Weiterhin ist erfindungsgemäß vorgesehen, dass für das Trennmittel in seiner Funktion als Kühlmittel für das Elastomer-Erzeugnis ein Kühlkreislauf zum Abführen der zugeführten Wärmemenge vorgesehen ist. Hierdurch wird eine mindest Temperaturdifferenz zwischen dem Elastomeren-Erzeugnis und dem Kühlmedium gewährleistet. Ein fortlaufender Wärmeübergang zwischen dem Elastomeren-Erzeugnis und dem Wärmeträger in der Form des Trennmittels ist hierdurch sichergestellt.

Weiterhin ist vorteilhaft vorgesehen, dass eine Einrichtung zur Uberwachung der Konzentration der aktiven Substanzen in der wässrigen Trennmittelzubereitung vorgesehen ist und eine Dosiervorrichtung zur Aufrechterhaltung der vorgegebenen Konzentration der aktiven Substanzen in der wässrigen Trennmittelzubereitung vorgesehen ist. Durch das Durchwandern der wässrigen Trennmittelzubereitung durch das Elastomer-Erzeugnis verarmt die Trennmittelzubereitung an Lösemittel, insbesondere Wasser und an aktiver Substanz. Diese aktive Substanz wird auf der Oberfläche des Elastomer-Erzeugnisses abgeschieden um die gewünschte Trennwirkung zwischen den Lagen von Elastomer-Erzeugnis zu gewährleisten.

Weiterhin wird ein Verfahren zum Betrieb einer Vorrichtung zum Kühlen eines aus einer Gummimischung gebildeten Elastomer-Erzeugnisses offenbart, das die folgenden Schritte aufweist:

- Übergabe des Elastomer-Erzeugnisses aus einem Ausformaggregat an eine Zuführvorrichtung,
- Fördern des Elastomer-Erzeugnisses durch eine Kühl- und Benetzungsvorrichtung,
- Übergabe des Elastomer-Erzeugnisses an eine Kühl- und/oder Abtropfvorrichtung,
- Fördern des Elastomer-Erzeugnisses durch die Kühl- und/oder Abtropfvorrichtung,
- Übergabe des Elastomer-Erzeugnisses an eine Lufttrocknungs- und Kühlvorrichtung,
- Fördern des Elastomer-Erzeugnisses durch die Lufttrocknungs- und Kühlvorrichtung
- Kommissionierung des gekühlten Elastomer-Erzeugnisses zum Transport, zur Lagerung und/oder zur Weiterverarbeitung. Durch das vorgeschlagene Verfahren wird die Wärmetauschrate zwischen dem Elastomer-Erzeugnis und dem Wärmeträgermedium erhöht. Durch den Einsatz von Wasser oder zumindest einer wässrigen Trennmittelzubereitung wird der Wärmetausch gegenüber der aus dem Stand der Technik bekannten Luft als Wärmeträgermedium deutlich verbessert.

Weiterhin ist offenbart, dass in der Kühl- und Benetzungsvorrichtung und/oder der Kühl- und/oder Abtropfvorrichtung ein wässriges Trennmittel als Kühlmittel eingesetzt wird und in einem Kreislauf geführt wird, wobei über Wärmetausch die eingetragene Wärmemenge abgeführt wird und über Dosiervorrichtungen die Konzentration der aktiven Substanz in der wässrigen Trennmittelzubereitung sowie das Volumen an Trennmittel nachgeführt wird. Hierdurch wird eine mindest Temperaturdifferenz zwischen dem zu kühlenden Elastomer-Erzeugnis und dem Wärmeträgermedium bewerkstelligt. Weiterhin ist sichergestellt, dass die wässrige Trennmittelzubereitung weder an aktiver Substanz noch an Lösemittel verarmt.

Weiterhin kann vorgesehen sein, dass das Fell in der Kühl- und Benetzungsvorrichtung und/oder der Kühl- und/oder Abtropfvorrichtung mit einem wässrigen Trennmittel benetzt wird. Hierdurch kann die Verweilzeit des Elastomer-Erzeugnisses bezüglich des Kontaktes mit dem Trennmittel gesteuert werden. Hierdurch können unterschiedliche Trennmittelschichten auf der Oberfläche des Elastomer-Erzeugnisses abgeschieden werden. Auch kann die Kühlrate hierdurch gesteuert werden.

Durch die beschriebene Ausführung kann die Gesamtlänge der Anlage um mindestens ein Gebäudefeld beziehungsweise Raster gekürzt werden. Die Anlage wird dabei zwar höher, das ist jedoch unkritisch. Bei neu zu bauenden Mischsälen kann das Mischsaalgebäude entsprechend kleiner gebaut werden.

Im Mischsaal ist der Elastomer-Kühlvorrichtung eine Mischanlage vorgeschaltet. Die Schnittstelle zwischen der Mischanlage und der Elastomer-Kühlvorrichtung ist ein Ausformaggregat, beispielsweise ausgeführt als Walzwerk oder Ausformextruder. Nachfolgend werden beispielhaft Mischanlagen sowie Mischverfahren beschrieben, welche mit der erfindungsgemäßen Elastomer-Kühlvorrichtung kombiniert werden können.

Der Mischer, beispielsweise ein Innenmischer entleert in einen Schacht, der mehrere Chargen aufnehmen kann. Dieser Mischungspuffer gestattet dem Extruder eine kontinuierliche Fahrweise. Die Aufgaben des Extruders bestehen in der Aufnahme und Ausformung der Mischung zu einem extrudierten Streifen, einem Materialstrang bestehend aus dem Elastomer-Erzeugnis. Eingesetzt werden dabei Einschneckenextruder und kurze Doppelschneckenextruder. Danach wird der Materialstrang einer Elastomer-Kühlvorrichtung zugeführt. In dieser Anlage werden die Materialstränge endgültig abgekühlt und zur weiteren Lagerung mit Trennmittel behandelt.

Das Elastomere-Erzeugnis bildet als Halbzeug Material für die kontinuierliche Gummiaufbereitung in Form von Materialstreifen, Fellen, Schnüren, Bändern oder Profilen unterschiedlicher Querschnitte und Längen sowie Endlosmaterialien geeignet ist.

Unter dem Begriff Elastomer-Erzeugnis wird in dieser Schrift ein Werkstoff, insbesondere aus der Gruppe der Elastomere mit viskoelastischen Eigenschaften verstanden. Das Elastomer-Erzeugnis kann auf Kautschuk und/oder anderen kautschukähnlichen Pflanzensäften basieren, die beim Eintrocknen vorzugsweise durch Polymerisation zu plastisch-elastischen Feststoffen verhärten. Kautschuk ist ein Sammelbegriff für elastische Polymere, aus denen Gummi hergestellt wird. Kautschuk kann vulkanisiert, unvulkanisiert oder vorvulkanisiert sein. Zur Ausführung der vorliegenden Erfindung kann ebenso natürlicher Kautschuk sowie synthetisch hergestellter Kautschuk verwendet werden.

Die insbesondere beim Doppelschneckenextruder während der Mischarbeit erzeugte Wärme im Extrudat lässt oftmals eine sofortige Weiterverarbeitung, beispielsweise das Einmischen eines Vernetzers oder Vulkanisationsbeschleunigers, nicht zu. Das aus einer Gummimischung erzeugte Elastomer-Erzeugnis muss vor diesem Einmischen erkalten und wird hierzu durch die Elastomer-Kühlvorrichtung geleitet.

Die Kühlung des Elastomer-Erzeugnisses erfolgt beispielsweise durch ein flüssiges Kühlmedium, wie beispielsweise Wasser, das durch mindestens eine Kühlvorrichtung geleitet wird. Ein an der Kühlvorrichtung angeschlossener Wärmetauscher besorgt die Abfuhr der überschüssigen Wärmemenge aus dem Kühlmittel. Abweichend von diesem Ausführungsbeispiel kann die Kühlung der Kühlvorrichtung aber auch durch um die Behälteraußenwand gelegte Kühlkanäle indirekt erfolgen.

Als zum Kühlen und gegebenenfalls zum Lösen, Emulgieren und/oder Suspendieren verwendete Kühlmittel können verschiedenste Flüssigkeiten verwendet werden. Besonders bevorzugt werden allerdings Wasser und Ethanol eingesetzt. Diese Substanzen sind in großen Mengen verfügbar, haben einen niedrigen Siedepunkt und sind im Hinblick auf die Umweltbelastung und der leichten Regenerierungsmöglichkeit als unkritisch zu betrachten.

Bei einer Ausführungsform wird dem zur Kühlung eingesetzten Wasser zumindest ein Netzmittel zugesetzt. Das Netzmittel verringert die Oberflächenspannung und ist in der Lage, die Oberfläche des Elastomer-Erzeugnisses weitgehend vollständig und flächig zu benetzen, wodurch der Abkühlungseffekt weiter verbessert wird.

Es ist darüber hinaus günstig, wenn das aufgesprühte und insbesondere netzmittelhaltige Wasser auf einen möglichst großen Teil der Oberfläche des Elastomer-Erzeugnisses aufgebracht, insbesondere aufgesprüht wird. Um den Kühlvorgang zu beschleunigen, ist es darüber hinaus auch von Vorteil, wenn unmittelbar nach dem Aufbringen des Wassers durch ein Einblasen beziehungsweise Zuführen von Luft die Verdunstung beschleunigt und damit die Kühlung verbessert wird.

Nachfolgend werden beispielhaft für die erfindungsgemäße Elastomer-Kühlvorrichtung sowie die Durchführung des erfindungsgemäßen Verfahrens einsetzbare Trennmittel in der Form von wässrigen Trennmittelzubereitungen mit aktiven Substanzen beschrieben.

Trennmittel, aufgetragen auf die Oberfläche einer unvulkanisierten Elastomer-Erzeugnis-Oberfläche, verhindern das Verkleben der Elastomer-Erzeugnisse mit sich selbst nach dem Mischungsvorgang oder auch während des Transports. Wichtig ist, dass das Trennmittel gut auf der Elastomer-Erzeugnis-Oberfläche anhaftet und dass es einen gleichförmigen Film auf der Oberfläche bildet.

Alle wässrigen Trennmittel, ob Lösungen, Dispersionen oder vom Maschinenführer selbst in Wasser dispergierte Puder, müssen die Elastomer-Erzeugnis-Oberfläche gut benetzen um zu trennen. Eine gute, homogene Filmbildung vor dem Abtrocknen des Wassers in der Elastomer-Kühlvorrichtung ist wesentlich, damit der Film, nach dem Durchlaufen der Elastomer-Kühlvorrichtung, gute Trenneigenschaften aufweist. Es ist der trockene Film, der trennt. Wenn die Trocknung unvollkommen ist, der Film also am Ende der Elastomer-Kühlvorrichtung noch feucht ist, dann können Probleme wie Gleiten auftreten und die Elastomer-Erzeugnisse könnten während des Transportes abrutschen.

Die verdünnte wässrige Lösung des Trennmittels wird beispielsweise durch Besprühen, Bestreichen oder Tauchen auf die klebrige Oberfläche des Elastomer-Erzeugnisses aufgebracht.

Als Trennmittel kann beispielsweise Magnesiumstearat mit Detergentien, Korrosionsschutzmitteln und Entschäumern eingesetzt werden. Hierbei handelt es sich um eine hocheffektive Magnesiumstearat-Dispersion für den Einsatz in der Elastomer-Kühlvorrichtung. In der Kühl- und Benetzungsvorrichtung und/oder der Kühl- und/oder Abtropfvorrichtung sind Tauch- und/oder Sprühanlagen zur Behandlung des Elastomer-Erzeugnisses vorgesehen.

Die Elastomer-Erzeugnisse dienen als Halbzeuge beispielsweise zur Herstellung von Reifen beziehungsweise zur Herstellung von Reifenbauteilen. Der Begriff Reifen umfasst Fahrzeugreifen und Fahrzeugluftreifen.

Weiterhin dienen die Elastomer-Erzeugnisse als Halbzeuge beispielsweise zur Herstellung von Transportbändern, Schläuchen, Luftfederbälge, Antriebsriemen, Membrane, Schwingungsdämpfer und weiteren Gummiprodukten.

Nachfolgend werden Ausführungsbeispiele anhand der beiliegenden Figuren näher erläutert.

Es zeigen:

Fig. 1      ein erstes Ausführungsbeispiel einer Elastomer-Kühlvorrichtung und

Fig. 2      ein weiteres Ausführungsbeispiel einer Elastomer-Kühlvorrichtung.

In den nachfolgenden Figurenbeschreibungen beziehen sich Begriffe wie oben, unten, vorne, hinten, links, rechts und dergleichen ausschließlich auf die in den jeweiligen Figuren gewählte beispielhafte Darstellung und Position der Elastomer-Kühlvorrichtung und anderer Elemente. Diese Begriffe sind nicht einschränkend zu verstehen, das heißt durch verschiedene Positionen und/oder spiegelsymmetrische Auslegung oder dergleichen können sich diese Bezüge ändern.

Gleiche Elemente erhalten in allen Figuren sowie in der nachfolgenden Beschreibung gleiche Bezugszeichen.

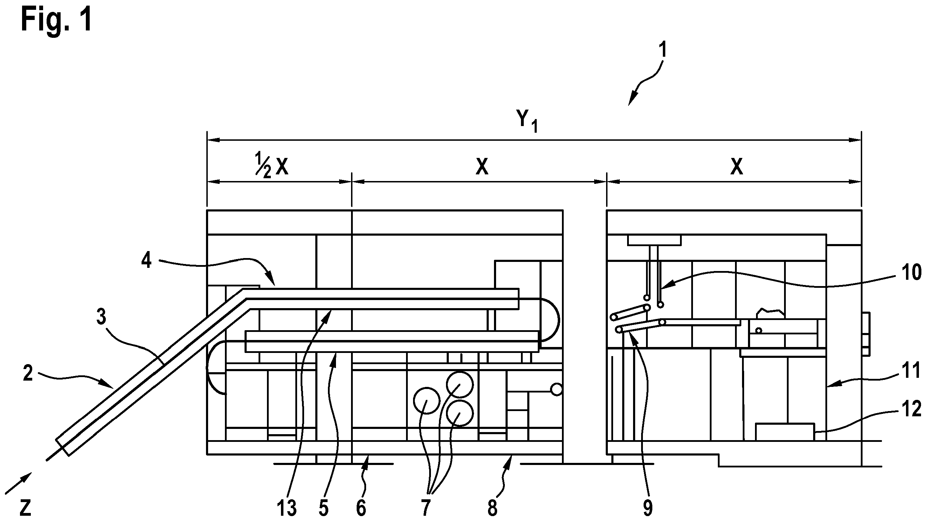

In der Figur 1 ist eine erfindungsgemäße Elastomer-Kühlvorrichtung 1 dargestellt. Diese Elastomer-Kühlvorrichtung 1 benötigt in ihrer Längserstreckung $Y_1$ lediglich 2,5 Raster X. Hieraus ergibt sich für ihrer Längserstreckung $Y_1$:

$$Y_1 = 2{,}5 \text{ x } X$$

Hierdurch werden in dem ersten Ausführungsbeispiel 1,5 X in der Längserstreckung der Elastomer-Kühlvorrichtung 1 gegenüber einer Batch-Off-Anlage aus dem Stand der Technik eingespart.

Dies wird ermöglicht durch die nachfolgend beschriebene Elastomer-Kühlvorrichtung 1 zum Kühlen von Elastomer-Erzeugnissen 3. Die Förderrichtung des Materialstrangs Z, ausgestaltet als Elastomer-Erzeugnis 3 gelangt von einem nicht dargestellten Ausformaggregat, beispielsweise ein Walzwerk oder ein Ausformextruder, zu einer Zuführvorrichtung 2. Diese Zuführvorrichtung 2 ist als Stetigförderer ausgelegt und kann beispielsweise als Transportband oder als Rollenbahn ausgeführt sein. Die Zuführvorrichtung 2 mündet in eine Kühl- und Benetzungsvorrichtung 4. Diese Kühl- und Benetzungsvorrichtung 4 ist mit einem Stetigförderer zum Transport des Elastomer-Erzeugnisses 3 versehen, welcher als Gliederkettenband ausgeführt sein kann. Damit das Elastomer-Erzeugnis 3 seine Position relativ zum Stetigförderer beibehält, können Niederhalterollen, verteilt auf die Transportstrecke vorgesehen sein. Die Kühl- und Benetzungsvorrichtung 4 kann als Behälter ausgefüllt sein, in dem Trennmittel derart eingefüllt ist, dass die Transportstrecke für das Elastomer-Erzeugnis 3 unterhalb des Flüssigkeitsniveaus verläuft und somit das Elastomer-Erzeugnis 3 vollständig oder nahezu vollständig mit dem Trennmittel benetzt wird. Die Kühl- und Benetzungsvorrichtung 4 weist somit ein Trennmittel-Reservoir 13 auf. Alternativ können Sprühvorrichtung entlang der Transportstrecke für das Elastomer-Erzeugnis 3 in der Kühl- und Benetzungsvorrichtung 4 für das Trennmittel vorgesehen sein, um das Elastomer-Erzeugnis 3 mit dem Trennmittel zu benetzen.

Sofern der Stetigförderer als Gliederkettenband ausgeführt ist, weist das Gliederkettenband Durchlässe in den einzelnen Gliedern beziehungsweise Segmenten auf. Hierdurch wird die Kontaktfläche zwischen dem Elastomer-Erzeugnis 3 und dem Gliederkettenband gering gehalten, sodass höchstens die Kontaktflächen des Elastomer-Erzeugnisses 3 nicht mit Trennmittel während des Durchlaufens der Transportstrecke benetzt werden. Jedoch werden diese Bereiche des Elastomer-Erzeugnisses 3 zumindest beim Eintritt in die Transportstrecke mit Trennmittel benetzt. Auch beim Austritt des Elastomer-Erzeugnisses aus der Transportstrecke kann das Elastomer-Erzeugnis 3 im Bereich der Kontaktflächen zum Gliederkettenband mit Trennmittel benetzt werden. Anstatt des Gliederkettenbandes kann auch eine Rollenbahn als Stetigförderer für den Transport des Elastomer-Erzeugnisses 3 durch die Kühl- und Benetzungsvorrichtung 4 vorgesehen sein. Beim Transport des Elastomer-Erzeugnisses mit einer Rollenbahn wechselt die Kontaktfläche zwischen dem Elastomer-Erzeugnis und den einzelnen Rollen durch die Rotation der Rollen, hierdurch ist eine vollständige Benetzung oder nahezu vollständige Benetzung des Elastomer-Erzeugnisses 3 mit Trennmittel während das Elastomer-Erzeugnis die Transportstrecke absolviert, gewährleistet.

Für das in der Kühl- und Benetzungsvorrichtung 4 vorgehaltene Trennmittel ist eine Überwachung der Konzentration der aktiven Substanzen in der wässrigen Zubereitung vorgesehen. Weiterhin wird durch eine Dosiervorrichtung eine gleichbleibende oder zumindest nahezu gleichbleibende Konzentration der aktiven Substanzen in der wässrigen Trennmittelzubereitung eingestellt.

Da der Hauptbestandteil des als wässrige Trennmittelzubereitung ausgeführten Trennmittels Wasser ist, dient es zugleich zum Kühlen des Elastomer-Erzeugnisses 3. Das Trennmittel in seiner Funktion als Kühlmittel weist eine Temperatur zwischen 15 und 45 °C, bevorzugt zwischen 20 und 40 °C, besonders bevorzugt zwischen 25 und 35 °C auf. In dem Wasseranteil des Trennmittels werden die aktiven Substanzen gelöst, dispergiert und/oder suspendiert. Das Trennmittel in seiner Funktion als Kühlmittel wird einem Kühlkreislauf zugeführt, um die durch das Elastomer-Erzeugnis 3 eingebrachte Wärmemenge abzuführen und ein Aufheizen des Trennmittels in seiner Funktion als Kühlmittel über den Siedepunkt von Wasser hinaus zu verhindern. Bevorzugt soll der Wärmeeintrag in das Trennmittel die oben genannten Werte nicht übersteigen, überschüssige Wärme soll durch den Kühlkreislauf abgeführt werden.

Die Elastomer-Erzeugnis-Eingangstemperatur in die Elastomer-Kühlvorrichtung 1 beträgt zwischen 120 °C und 200 °C, bevorzugt zwischen 130 °C und 190 °C, besonders bevorzugt zwischen 140 °C und 180 °C. Die Elastomer-Erzeugnis-Ausgangstemperatur aus der Elastomer-Kühlvorrichtung 1 beträgt zwischen 20 °C und 60 °C, bevorzugt zwischen 30 °C und 50 °C, jedoch insbesondere mindestens 5 °C über Raumtemperatur. Die Elastomer-Erzeugnis-Dicke beträgt bis zu 20 mm, bevorzugt zwischen 4 und 16 mm, besonders bevorzugt zwischen 6 und 12 mm. Die Elastomer-Erzeugnis-Breite beträgt bis zu 1400 mm, bevorzugt zwischen 100 und 1250 mm, besonders bevorzugt zwischen 500 und 1000 mm.

Die Elastomer-Erzeugnis-Eingangstemperatur in die Kühl- und Benetzungsvorrichtung 4 beträgt zwischen 120 °C und 200 °C, bevorzugt zwischen 130 °C und 190 °C, besonders bevorzugt zwischen 140 °C und 180 °C. Die Elastomer-Erzeugnis-Ausganstemperatur aus der Kühl- und Benetzungsvorrichtung 4 beträgt zwischen 120 °C und 160 °C, bevorzugt zwischen 100 °C und 140 °C.

Unterhalb der Kühl- und Benetzungsvorrichtung 4 ist eine Kühl- und/oder Abtropfvorrichtung 5 angeordnet.

Zur Überwindung des Höhenunterschiedes zwischen der Kühl- und Benetzungsvorrichtung 4 und der Kühl- und/oder Abtropfvorrichtung 5 kann beispielsweise eine -nicht dargestellte- walzenförmige Fördereinrichtung vorgesehen sein, auf der das Elastomer-Erzeugnis 3 zur Anlage kommt und ohne seine geometrische Gestalt wesentlich zu verändern in die darunter gelegene Kühl- und/oder Abtropfvorrichtung 5 gelangt.

Nach dem Verlassen der Kühl- und Benetzungsvorrichtung 4 tritt das mit Trennmittel benetzte und vorgekühlte Elastomer-Erzeugnis 3 in die Kühl- und/oder Abtropfvorrichtung 5 ein. Die durch das Elastomer-Erzeugnis 3 in der Kühl- und/oder Abtropfvorrichtung 5 zu absolvierende Transportstrecke wird durch einen Stetigförderer bewerkstelligt und kann wiederum beispielsweise als Gliederkettenband oder als Rollenbahn mit optionalen Niederhalterrollen ausgeführt sein.

Die Kühl- und/oder Abtropfvorrichtung 5 kann einen Flüssigkeitsspiegel aufweisen, in den das Fell während des Durchlaufens der Transportstrecke vollständig eintaucht. Diese Flüssigkeit dient als Kühlmittel zum weiteren Kühlen des Elastomer-Erzeugnisses 3. Diesem Kühlmittel wird wiederum innerhalb eines Kühlkreislaufs die durch das Elastomer-Erzeugnis 3 eingetragene Wärmemenge entzogen. Das Kühlmittel kann wiederum als Trennmittel ausgeführt sein, in diesem Fall wird die Konzentration der aktiven Substanzen in der wässrigen Trennmittelzubereitung überwacht und aufrechterhalten.

Die Elastomer-Erzeugnis-Eingangstemperatur in die Kühl- und/oder Abtropfvorrichtung 5 entspricht nahezu der Elastomer-Erzeugnis-Ausgangstemperatur der Kühl- und Benetzungsvorrichtung 4.

Alternativ kann die Kühl- und/oder Abtropfvorrichtung 5 zum Abtropfen des Trennmittels von dem Elastomer-Erzeugnis 3 dienen. Es bildet sich auf der Oberfläche des Elastomer-Erzeugnisses 3 eine Trennmittelschicht aus, die während der Lagerung und/oder des Transports des Elastomer-Erzeugnisses 3 ein aneinanderhaften von Elastomer-Erzeugnis-Lagen unterbindet. Der Abtropfprozess kann durch nicht dargestellte Gebläse unterstützt werden. Das abgetropfte Trennmittel wird aufgefangen und nach einer eventuellen Aufbereitung wieder der Kühl- und Benetzungsvorrichtung 4 zugeführt.

Die Elastomer-Erzeugnis-Ausgangstemperatur aus der Kühl- und/oder Abtropfvorrichtung 5 beträgt zwischen 40 °C und 100 °C, bevorzugt zwischen 60 °C und 80 °C.

Nach dem Verlassen der Kühl- und/oder Abtropfvorrichtung 5 wird das Elastomer-Erzeugnis 3 einer Lufttrocknungs- und Kühlvorrichtung 6 zugeführt.

Zur Überwindung des Höhenunterschiedes zwischen der Kühl- und/oder Abtropfvorrichtung 5 und der Lufttrocknungs- und Kühlvorrichtung 6 kann ebenfalls beispielsweise eine -nicht dargestellte- walzenförmige Fördereinrichtung vorgesehen sein, auf der das Elastomer-Erzeugnis 3 zur Anlage kommt und ohne seine geometrische Gestalt wesentlich zu verändern in die darunter gelegene Lufttrocknungs- und Kühlvorrichtung 6 gelangt.

Diese Lufttrocknungs- und Kühlvorrichtung 6 weist mehrere Gebläse 7 auf.

Die Elastomer-Erzeugnis-Eingangstemperatur in die Lufttrocknungs- und Kühlvorrichtung 6 entspricht nahezu der Elastomer-Erzeugnis-Ausgangstemperatur der Kühl- und/oder Abtropfvorrichtung 5. Die Elastomer-Erzeugnis-Ausgangstemperatur aus der Lufttrocknungs- und Kühlvorrichtung 6 beträgt zwischen 20 °C und 60 °C, bevorzugt zwischen 30 °C und 50 °C, jedoch insbesondere mindestens 5 °C über Raumtemperatur.

Das Elastomer-Erzeugnis 3 wird in Schlaufen von bis zu 2 m Ausdehnung über Träger hängend durch die Lufttrocknungs- und Kühlvorrichtung 6 geführt.

An die Lufttrocknungs- und Kühlvorrichtung 5 schließt sich ein Speicher 8 an. Dieser Speicher 8 dient zur Aufnahme des gekühlten Elastomer-Erzeugnisses 3 vor der Übergabe an eine Transportvorrichtung 9, welche als Steigförderer ausgeführt ist. Diese Transportvorrichtung 9 führt das gekühlte Elastomer-Erzeugnis 3 einer Breitenschneidvorrichtung 10 zu. Von der Breitenschneidvorrichtung 10 wird das gekühlte Elastomer-Erzeugnis 3 weiter zu einer Kommissionierungsvorrichtung 11 geführt.

Diese Kommissionierungsvorrichtung 11 kann als Wig-Wag-Verlegung ausgeführt sein, um das gekühlte Elastomer-Erzeugnis 3 auf einem Transportmittel 12 abzulegen. Das Transportmittel 12 kann als Palette ausgeführt sein. Nach der Ablage einer vorbestimmten Menge gekühlten Elastomer-Erzeugnisses 3 wird das Transportmittel 12 beispielsweise mit einem Flurförderfahrzeug in ein Lager verbracht oder der Weiterverarbeitung des Elastomer-Erzeugnisses 3 zugeführt.

Die Kommissionierungsvorrichtung 11 kann alternativ durch einen beidseitig schwenkbaren Greifer das Elastomer-Erzeugnis im Stapelbetrieb von der Pendelablage entsprechend vorgegebener Batchlänge oder definierter Batchmasse auf einer bereitgestellten Palette ablegen. Durch sensorgesteuertes Absenken des Hubtisches wird zusammen mit dem Einsatz pneumatisch betriebener Niederhalteplatten ein optimales Stapelergebnis gewährleistet. Für zeiteffiziente Palettenwechsel bei vollautomatischem Betrieb können Palettentransportsysteme mit Palettenmagazin integriert sein.

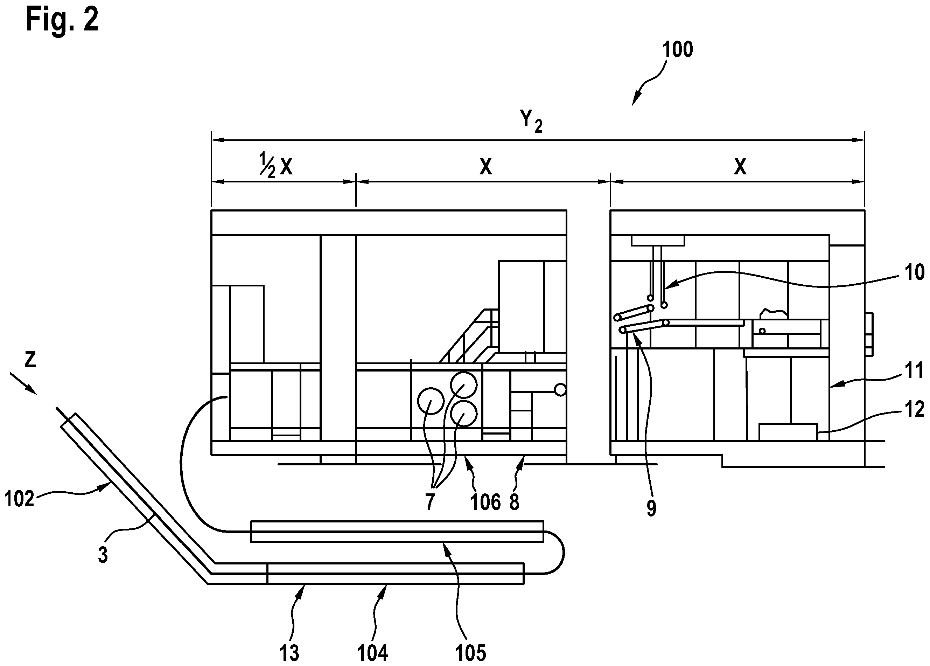

Die Figur 2 zeigt ein weiteres Ausführungsbeispiel einer Elastomer-Kühlvorrichtung 100. Diese Elastomer-Kühlvorrichtung 100 benötigt in ihrer Längserstreckung $Y_2$ lediglich 2,5 Raster X. Hieraus ergibt sich für ihrer Längserstreckung $Y_2$:

$$Y_2 = 2,5 \text{ x } X$$

Hierdurch werden in dem zweiten Ausführungsbeispiel ebenfalls 1,5 X in der Längserstreckung der Elastomer-Kühlvorrichtung 1 gegenüber einer Batch-Off-Anlage aus dem Stand der Technik eingespart.

Dies wird ermöglicht durch die nachfolgend beschriebene Elastomer-Kühlvorrichtung 100 zum Kühlen von Elastomer-Erzeugnissen 3. Die Förderrichtung des Materialstrangs Z, ausgestaltet als Elastomer-Erzeugnis 3 gelangt von einem nicht dargestellten Ausformaggregat, beispielsweise ein Walzwerk oder ein Ausformextruder, zu einer Zuführvorrichtung 102. Diese Zuführvorrichtung 102 ist als Stetigförderer ausgelegt und kann beispielsweise als Transportband oder als Rollenbahn ausgeführt sein. Die Zuführvorrichtung 102 mündet in eine Kühl- und Benetzungsvorrichtung 104. Diese Kühl- und Benetzungsvorrichtung 104 ist mit einem Stetigförderer zum Transport des Elastomer-Erzeugnisses 3 versehen welcher als Gliederkettenband ausgeführt sein kann. Damit das Elastomer-Erzeugnis 3 seine Position relativ zum Stetigförderer beibehält, können Niederhalterollen, verteilt auf die Transportstrecke vorgesehen sein. Zur Ausgestaltung der Kühl- und Benetzungsvorrichtung 104, den in ihr vorgesehenen Stetigförderer, sowie dem Trennmittel und den Temperaturverläufen wird auf die Ausführungen zur Kühl- und Benetzungsvorrichtung 4 der Figur 1 verwiesen.

Oberhalb der Kühl- und Benetzungsvorrichtung 104 ist eine Kühl- und/oder Abtropfvorrichtung 105 angeordnet. Nach dem Verlassen der Kühl- und Benetzungsvorrichtung 104 tritt das mit Trennmittel benetzte und vorgekühlte Elastomer-Erzeugnis 3 in die Kühl- und/oder Abtropfvorrichtung 105 ein. Die durch das Elastomer-Erzeugnis 3 in der Kühl- und/oder Abtropfvorrichtung 105 zu absolvierende Transportstrecke wird durch einen Stetigförderer bewerkstelligt. Zur Ausgestaltung der Kühl- und/oder Abtropfvorrichtung 105 wird auf die Ausführungen zur Kühl- und/oder Abtropfvorrichtung 5 der Figur 1 verwiesen.

Zur Überwindung des Höhenunterschiedes zwischen der Kühl- und Benetzungsvorrichtung 104 und der Kühl- und/oder Abtropfvorrichtung 105 kann beispielsweise eine -nicht dargestellte- walzenförmige Fördereinrichtung vorgesehen sein, auf der das Elastomer-Erzeugnis 3 zur Anlage kommt und ohne seine geometrische Gestalt wesentlich zu verändern in die höher gelegene Kühl- und/oder Abtropfvorrichtung 105 gelangt.

Wenn die Kühl- und/oder Abtropfvorrichtung 105 zum Abtropfen des Trennmittels von dem Elastomer-Erzeugnis 3 dient, kann das abgetropfte Trennmittel über Durchlässe direkt in die darunter gelegene Kühl- und Benetzungsvorrichtung 104 gelangen, um dort wieder eingesetzt zu werden. Der Abtropfprozess kann durch nicht dargestellte Gebläse unterstützt werden. Alternativ wird das abgetropfte Trennmittel aufgefangen und nach einer eventuellen Aufbereitung wieder der Kühl- und Benetzungsvorrichtung 104 zugeführt.

Nach dem Verlassen der Kühl- und/oder Abtropfvorrichtung 105 wird das Elastomer-Erzeugnis 3 einer darüber angeordneten Lufttrocknungs- und Kühlvorrichtung 106 zugeführt. Diese Lufttrocknungs- und Kühlvorrichtung 106 weist mehrere Gebläse 7 auf.

Zur Überwindung des Höhenunterschiedes zwischen der Kühl- und/oder Abtropfvorrichtung 105 und der Lufttrocknungs- und Kühlvorrichtung 106 kann ebenfalls beispielsweise eine -nicht dargestellte- walzenförmige Fördereinrichtung vorgesehen sein, auf der das Elastomer-Erzeugnis 3 zur Anlage kommt und ohne seine geometrische Gestalt wesentlich zu verändern in die höher gelegene Lufttrocknungs- und Kühlvorrichtung 106 gelangt.

An die Lufttrocknungs- und Kühlvorrichtung 106 schließt sich ein Speicher 8 an. Dieser Speicher 8 dient zur Aufnahme des gekühlten Elastomer-Erzeugnisses 3 vor der Übergabe an eine Transportvorrichtung 9, welche als Steigförderer ausgeführt ist. Diese Transportvorrichtung 9 führt das gekühlte Elastomer-Erzeugnis 3 einer Breitenschneidvorrichtung 10 zu. Von der Breitenschneidvorrichtung 10 wird das gekühlte Elastomer-Erzeugnis 3 weiter zu einer Kommissionierungsvorrichtung 11 geführt. Zu möglichen Ausführungen der Kommissionierungsvorrichtung 11 wird auf die Beschreibung zu Figur 1 verwiesen.

Sofern in dem Industriegebäude beziehungsweise Mischsaal Bauraum unterhalb der Lufttrocknungs- und Kühlvorrichtung 106 besteht, können die Kühl- und Benetzungsvorrichtung 104 sowie die Kühl- und/oder Abtropfvorrichtung 105 unterhalb der Lufttrocknungs- und Kühlvorrichtung 106 der Elastomer-Kühlvorrichtung 100 angeordnet werden.

Das durch eine erfindungsgemäße Elastomer-Kühlvorrichtung 1, 100 bereitgestellte Elastomer-Erzeugnis 3 dient als Halbzeug in der Gummi beziehungsweise Kautschuk verarbeitenden Industrie und kann beispielsweise zu Reifen, Transportbändern, Schläuchen, Luftfederbälge, Antriebsriemen, Membrane, Schwingungsdämpfer und anderen Gummi- beziehungsweise Kautschukprodukten weiter verarbeitet werden.

**BEZUGSZEICHENLISTE**

| | |
|---|---|
| 1 | Elastomer-Kühlvorrichtung (Vorrichtung zum Kühlen eines aus einer Gummimischung gebildeten Elastomer-Erzeugnisses) |
| 100 | Elastomer-Kühlvorrichtung (Vorrichtung zum Kühlen eines aus einer Gummimischung gebildeten Elastomer-Erzeugnisses) |
| 2 | Zuführvorrichtung |
| 102 | Zuführvorrichtung |
| 3 | Elastomer-Erzeugnis (Materialstrang aus fertiger Elastomermischung) |
| 4 | Kühl- und Benetzungsvorrichtung |
| 104 | Kühl- und Benetzungsvorrichtung |
| 5 | Kühl- und/oder Abtropfvorrichtung |
| 105 | Kühl- und/oder Abtropfvorrichtung |
| 6 | Lufttrocknungs- und Kühlvorrichtung |
| 106 | Lufttrocknungs- und Kühlvorrichtung |
| 7 | Gebläse |
| 8 | Speicher |
| 9 | Transportvorrichtung |
| 10 | Breitenschneidvorrichtung |
| 11 | Kommissionierungsvorrichtung |
| 12 | Transportmittel |
| 13 | Trennmittel-Reservoir |
| X | Raster |
| $Y_1$ | Längserstreckung Elastomer-Kühlvorrichtung 1 |
| $Y_2$ | Längserstreckung Elastomer-Kühlvorrichtung 100 |
| Z | Förderrichtung des Materialstrangs |

**Patentansprüche**

1. Vorrichtung (1, 100) zum Kühlen eines aus einer Gummimischung gebildeten Elastomer-Erzeugnisses (3) für die Herstellung von Fahrzeugreifen,

   aufweisend eine Zuführvorrichtung (2, 102), eine Lufttrocknungs- und Kühlvorrichtung (6, 106), eine Kommissionierungsvorrichtung (10) sowie eine weitere Kühlvorrichtung (4, 104, 5;

105), wobei in der weiteren Kühlvorrichtungen (4, 104) ein wässriges Trennmittel als Kühlmittel für das Elastomer-Erzeugnis (3) eingesetzt ist und

die weitere Kühlvorrichtung als Kühl- und Benetzungsvorrichtung (4, 104) für das Elastomere-Erzeugnis (3) ausgeführt ist, **dadurch gekennzeichnet, dass** die Kühl und Benetzungsvorrichtung (4, 104) oberhalb oder unterhalb der Lufttrocknungs- und Kühlvorrichtung (6, 106) angeordnet ist und die Kühl- und Benetzungsvorrichtung (4, 104) ein Trennmittel-Reservoir (13) zum Benetzen des Elastomer-Erzeugnisses (3) aufweist

und

für das Trennmittel in seiner Funktion als Kühlmittel für das Elastomer-Erzeugnis (3) ein Kühlkreislauf zum Abführen der zugeführten Wärmemenge vorgesehen ist.

2. Vorrichtung (1, 100) nach Patentanspruch 1, **dadurch gekennzeichnet, dass** die Kühl- und Benetzungsvorrichtung (4, 104) eine Länge zwischen 4 und 10 m, bevorzugt zwischen 5 und 9 m, besonders bevorzugt zwischen 6 und 8 m aufweist.

3. Vorrichtung (1, 100) nach einem der vorhergehenden Patentansprüche,
**dadurch gekennzeichnet, dass**
eine der weiteren Kühlvorrichtungen als Kühlund/oder Abtropfvorrichtung (5, 105) für das Elastomere-Erzeugnis (3) ausgeführt ist.

4. Vorrichtung (1, 100) nach einem der vorhergehenden Patentansprüche,
**dadurch gekennzeichnet, dass**
zum Transport des Elastomeren-Erzeugnisses (3) durch die Kühl- und Benetzungsvorrichtung (4, 104) sowie durch die Kühl- und/oder Abtropfvorrichtung (5, 105) als Stetigförderer ein Gliederkettenband mit optionalen Niederhalterrollen vorgesehen ist.

5. Vorrichtung (1, 100) nach einem der vorhergehenden Patentansprüche,
**dadurch gekennzeichnet, dass**
eine Einrichtung zur Überwachung der Konzentration der aktiven Substanzen in der wässrigen Trennmittelzubereitung vorgesehen ist und eine Dosiervorrichtung zur Aufrechterhaltung der vorgegebenen Konzentration der aktiven Substanzen in der wässrigen Trennmittelzubereitung vorgesehen ist.

**Claims**

1. Device (1, 100) for the cooling of an elastomer product (3) which has been formed from a rubber mixture and which is intended for the production of tyres, comprising an input device (2, 102), an air-drying and cooling device (6, 106), a device (10) for preparing the product for onward passage, and also a further cooling device (4, 104, 5; 105), where in the further cooling device (4, 104) an aqueous release agent is used as coolant for the elastomer product (3)
and

the further cooling device is designed as cooling and wetting device (4, 104) for the elastomer product (3), **characterized in that** the cooling and wetting device (4, 104) is arranged above or below the air-drying and cooling device (6, 106), and the cooling and wetting device (4, 104) comprises a release agent reservoir (13) for the wetting of the elastomer product (3),
and

a cooling circuit for the dissipation of the heat introduced is provided for the release agent in its function as coolant for the elastomer product (3).

2. Device (1, 100) according to Patent Claim 1, **characterized in that** the cooling and wetting device (4, 104) has a length between 4 and 10 m, preferably between 5 and 9 m, particularly preferably between 6 and 8 m.

3. Device (1, 100) according to either of the preceding patent claims,
**characterized in that**
one of the further cooling devices is designed as cooling and/or drip-drying device (5, 105) for the elastomer product (3).

4. Device (1, 100) according to any of the preceding patent claims,
**characterized in that**
for the transport of the elastomer product (3) through the cooling and wetting device (4, 104), and also through the cooling and/or drip-drying device (5, 105), a link-chain belt is provided as continuously-operating conveyor, with optional hold-down rollers.

5. Device (1, 100) according to any of the preceding patent claims,
**characterized in that**
equipment for the monitoring of the concentration of the active substances in the aqueous release agent preparation is provided, and a metering device is provided for the maintenance of the prescribed concentration of the active substances in the aqueous release agent preparation.

**Revendications**

1. Dispositif (1, 100) de refroidissement d'un produit élastomère (3) qui est formé d'un mélange de caoutchoucs et qui est destiné à la production de pneumatiques de véhicules,

ledit dispositif comportant un dispositif d'alimentation (2, 102), un dispositif de séchage et de refroidissement par air (6, 106), un dispositif de préparation de commandes (10) et un autre dispositif de refroidissement (4, 104, 5 ; 105),

un agent de séparation aqueux étant utilisé comme agent de refroidissement du produit élastomère (3) dans l'autre dispositif de refroidissement (4, 104) et l'autre dispositif de refroidissement étant réalisé sous la forme d'un dispositif de refroidissement et de mouillage (4, 104) destiné au produit élastomère (3), **caractérisé en ce que** le dispositif de refroidissement et de mouillage (4, 104) est disposé au-dessus ou au-dessous du dispositif de séchage et de refroidissement par air (6, 106) et

le dispositif de refroidissement et de mouillage (4, 104) comporte un réservoir d'agent de séparation (13) destiné à mouiller le produit élastomère (3) et un circuit de refroidissement destiné à évacuer la quantité de chaleur fournie est prévu pour l'agent de séparation dans sa fonction d'agent de refroidissement du produit élastomère (3).

2. Dispositif (1, 100) selon la revendication 1, **caractérisé en ce que** le dispositif de refroidissement et de mouillage (4, 104) a une longueur comprise entre 4 et 10 m, de préférence entre 5 et 9 m, de manière particulièrement préférée entre 6 et 8 m.

3. Dispositif (1, 100) selon l'une des revendications précédentes,
   **caractérisé en ce que**
   l'un des autres dispositifs de refroidissement est réalisé sous la forme d'un dispositif de refroidissement et/ou d'égouttage (5, 105) destiné au produit élastomère (3).

4. Dispositif (1, 100) selon l'une des revendications précédentes,
   **caractérisé en ce que**
   une bande de type chaîne à maillons pourvue de rouleaux de retenue optionnels est prévue comme convoyeur continu pour transporter le produit élastomère (3) à travers le dispositif de refroidissement et de mouillage (4, 104) et à travers le dispositif de refroidissement et/ou d'égouttage (5, 105).

5. Dispositif (1, 100) selon l'une des revendications précédentes,
   **caractérisé en ce que**
   une unité est prévue pour surveiller la concentration des substances actives dans la préparation d'agent de séparation aqueux et un dispositif de dosage est prévu pour maintenir la concentration spécifiée des substances actives dans la préparation d'agent de séparation aqueux.

Fig. 1

EP 3 219 459 B1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20103680 U1

- US 20130277880 A1